(19) Europäisches Patentamt
European Patent Office
Office européen des brevets

(11) **EP 3 985 832 B1**

(12) **EUROPÄISCHE PATENTSCHRIFT**

(45) Veröffentlichungstag und Bekanntmachung des Hinweises auf die Patenterteilung:
**31.01.2024   Patentblatt 2024/05**

(21) Anmeldenummer: **21202458.2**

(22) Anmeldetag: **13.10.2021**

(51) Internationale Patentklassifikation (IPC):
***H02J 7/00*** *(2006.01)*

(52) Gemeinsame Patentklassifikation (CPC):
**H02J 7/0047;** H02J 7/0014; H02J 7/0029

(54) **ÜBERWACHUNG EINER ELEKTRISCHEN SPEICHEREINRICHTUNG**

MONITORING OF AN ELECTRIC STORAGE DEVICE

SURVEILLANCE D'UN DISPOSITIF ACCUMULATEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2020   DE 102020213024**

(43) Veröffentlichungstag der Anmeldung:
**20.04.2022   Patentblatt 2022/16**

(73) Patentinhaber: **Siemens Mobility GmbH**
**81739 München (DE)**

(72) Erfinder:
• **Buchler Klätschke, Lars**
**90419 Nürnberg (DE)**
• **Jaumann, Tony**
**90419 Nürnberg (DE)**
• **Lingen, Christian**
**91054 Erlangen (DE)**

(74) Vertreter: **Siemens Patent Attorneys**
**Postfach 22 16 34**
**80506 München (DE)**

(56) Entgegenhaltungen:
DE-A1-102018 201 031     US-A1- 2013 065 093
US-A1- 2014 152 258     US-A1- 2014 227 571

EP 3 985 832 B1

**Beschreibung**

Die Erfindung bezieht sich auf ein Verfahren zum Überwachen einer elektrischen Speichereinrichtung, die zwei oder mehr elektrisch in Reihe geschaltete Speichereinheiten aufweist, wobei die Speichereinheiten im Rahmen eines jeweiligen Symmetriervorgangs in einem vorgegebenen Maße entladen werden, falls ein die an ihnen jeweils anliegende elektrische Spannung angebender Spannungswert eine vorgegebene Spannungsschwelle überschreitet.

Bei Speichereinrichtungen, die zwei oder mehr elektrisch in Reihe geschaltete Speichereinheiten aufweisen, besteht häufig die Aufgabe bzw. das Problem, dass die Speichereinheiten mit Blick auf optimale Leistungsfähigkeit des Systems gleiche oder zumindest ähnliche Ladezustände aufweisen sollen. Beispielsweise durch Streuung in der Produktion bzw. unterschiedliche Alterung der Speichereinheiten kann es zu temporär unterschiedlichen Ladezuständen bzw. unterschiedlichen elektrischen Ladespannungen der einzelnen Speichereinheiten kommen. Dem lässt sich durch regelmäßige Symmetriervorgänge entgegenwirken, bei denen die Speichereinheiten jeweils in einem vorgegebenen Maße entladen werden, falls ihr Ladezustand bzw. ihre elektrische Ladespannung zu hoch ist.

Eine solche Symmetrierung der Ladezustände setzt jedoch eine individuelle Überwachung der Ladezustände der Speichereinheiten voraus und kann daher nicht zum Ziel führen, wenn bei einzelnen oder mehreren der Speichereinheiten die anliegenden Spannungen nicht oder nur fehlerhaft erfasst werden. Insbesondere wenn zu kleine Spannungen gemessen werden, fallen bei den betroffenen Speichereinheiten nötige Symmetriervorgänge bzw. Entladevorgänge aus und die Spannung steigt dort über die vorgegebene Spannungsschwelle an. Ein solches Fehlerszenario kann unter Umständen in einer Zerstörung der betroffenen Speichereinheit und nachfolgend sogar in der Zerstörung der gesamten Speichereinrichtung münden.

Bezüglich der Symmetrierung von Speichereinheiten sind die Dokumente US 2013/065093 A1, US 2014/152258 A1, US 2014/227571 A1 sowie DE 10 2018 201031 A1 einschlägig.

Der Erfindung liegt die Aufgabe zugrunde, ein Verfahren der beschriebenen Art hinsichtlich der Symmetrierung der Speichereinheiten besonders sicher zu gestalten.

Diese Aufgabe wird erfindungsgemäß durch ein Verfahren sowie eine Anordnung mit den jeweiligen Merkmalen gemäß den unabhängigen Patentansprüchen gelöst. Vorteilhafte Ausgestaltungen des erfindungsgemäßen Verfahrens bzw. der Anordnung sind in jeweiligen abhängigen Patentansprüchen angegeben.

Nach dem erfindungsgemäßen ist vorgesehen, dass die Symmetriervorgänge über einen Beobachtungszeitraum beobachtet werden und ein Warnsignal erzeugt wird, wenn die beobachteten Symmetriervorgänge die Speichereinheiten über ein vorgegebenes Maß hinaus ungleichmäßig betreffen.

Ein wesentlicher Vorteil der Überwachung der Symmetriervorgänge mit Blick auf die Verteilung besteht in einer sehr einfachen, aber dennoch sehr zuverlässigen Erkennung von Fehlern. Die Erfindung geht von dem Gedanken aus, dass - bei korrekter Messung der Spannungen an den Speichereinheiten und funktionsfähigen Speichereinheiten - aus statistischen Gründen und bei einer angemessenen Beobachtungszeitspanne - alle zumindest einmal symmetriert werden sollten. Mit anderen Worten ist es statistisch unplausibel, wenn eine oder mehrere Speichereinheiten niemals synchronisiert bzw. entladen werden müssen. So führt nämlich ein jeder Entladevorgang bei einzelnen Speichereinheiten und jedes Nachladen aller Speichereinheiten im Mittel zu einem Ansteigen der relativen Ladungsniveaus der noch nicht symmetrierten Speichereinheiten, sodass diese nach und nach an ihre eigene Spannungsgrenze herangeführt werden und somit eine Symmetrierung (auch) dieser nötig wird.

Erfindungsgemäß wird dabei das Warnsignal erzeugt, wenn am Ende des Beobachtungszeitraums für eine oder mehrere Speichereinheiten keine Symmetriervorgänge beobachtet worden sind.

Gemäß einer weiteren Weiterbildung wird der Beobachtungszeitraum mit der Erstinbetriebnahme oder bei jeder Wiederinbetriebnahme der Speichereinrichtung neu gestartet und schließt ausschließlich zeitliche Phasen ein, in denen die Speichereinrichtung bestimmungsgemäß genutzt und in keinem Prüfbetriebsmodus betrieben wird. Eine bestimmungsgemäße Nutzung kann beispielsweise darin bestehen, dass mit elektrischer Energie der Speichereinrichtung ein Antrieb eines Fahrzeugs gespeist oder beim Bremsen des Fahrzeugs generierte elektrische Bremsenergie gespeichert wird.

Gemäß einer weiteren Weiterbildung erfolgt die Beobachtung im Rahmen eines Prüfbetriebsmodus, der sich von einem Normalbetriebsmodus der Speichereinrichtung unterscheidet, und wird der Beobachtungszeitraum mit dem Umschalten von dem Normalbetriebsmodus in den Prüfbetriebsmodus gestartet.

Gemäß einer auf der vorstehenden Weiterbildung basierenden weiteren Weiterbildung wird im Rahmen des Prüfbetriebsmodus die Spannung an der elektrischen Speichereinrichtung auf einem Spannungsniveau gehalten, das der maximal erlaubten Gesamtspannung an der elektrischen Speichereinrichtung entspricht und welches durch stetes Nachladen während des Prüfbetriebsmodus gehalten wird.

Gemäß einer weiteren Weiterbildung ist die Dauer des Beobachtungszeitraums fest vorgegeben, und wird das Ende des Beobachtungszeitraums ausschließlich von dem Beginn der Beobachtung festgelegt.

Gemäß einer zu der vorstehenden Weiterbildung alternativen Weiterbildung ist die Dauer des Beobachtungszeitraums variabel, und wird das Ende des Beobachtungszeitraums von beobachteten Symmetriervorgängen festgelegt.

Nach einer weiteren Weiterbildung wird das Ende des laufenden Beobachtungszeitraums erstmals festgelegt, wenn zu ersten Referenzzeitpunkt für eine vorgegebene Anzahl oder einen vorgegebenen Anteil an Speichereinheiten jeweils ein Symmetriervorgang beobachtet worden ist.

Einer auf der vorstehenden Weiterbildung basierender weiteren Weiterbildung zufolge wird das Ende des Beobachtungszeitraums in Abhängigkeit sowohl von dem ersten Referenzzeitpunkt als auch einer Zeitspanne zwischen einem Zeitpunkt des Beginns der Beobachtung und dem ersten Referenzzeitpunkt festgelegt.

Gemäß einer auf einer der beiden vorstehenden Weiterbildungen basierenden Weiterbildung wird ein neues Ende des Beobachtungszeitraums festgelegt, wenn nach Beginn und vor Ablauf des aktuellen Beobachtungszeitraums bei zumindest einer Speichereinheit erstmalige ein Symmetriervorgang beobachtet wird, wobei der Zeitpunkt dieser Beobachtung einen weiteren Referenzzeitpunkt bildet.

Ein geplantes Ende des Beobachtungszeitraums wird somit jeweils neu festgelegt und es wird ein neues Ende bestimmt bzw. geplant, wenn vor dem Ablauf des jeweils aktuellen Beobachtungszeitraums bei zumindest einer Speichereinheit erstmalig - bezogen auf die Zeit nach dem Beobachtungsbeginn - ein Symmetriervorgang beobachtet wird.

Einer auf der vorstehenden Weiterbildung basierenden weiteren Weiterbildung zufolge wird das neue Ende des Beobachtungszeitraums in Abhängigkeit von dem weiteren Referenzzeitpunkt und einer Zeitspanne zwischen dem Zeitpunkt des Beginns der Beobachtung und dem weiteren Referenzzeitpunkt festgelegt.

Die Bestimmung des neuen, im Sinne von "aktualisierten" geplanten Endes erfolgt somit sowohl in Abhängigkeit von dem weiteren Referenzzeitpunkt als auch in Abhängigkeit von der Zeitspanne zwischen dem Beobachtungsbeginn und dem weiteren Referenzzeitpunkt.

Gemäß einer weiteren Weiterbildung umfasst die Beobachtung zumindest zwei Beobachtungzeiträume, nämlich einen Beobachtungszeitraum, der ausschließlich Zeitenberücksichtigt, in denen die Speichereinrichtung im Normalbetriebsmodus betrieben wird, und einen oder mehrere Beobachtungszeiträume, die ausschließlich Zeiten berücksichtigen, in denen die Speichereinrichtung im Prüfbetriebsmodus betrieben wird.

Eine erfindungsgemäße Anordnung mit einer elektrischen Speichereinrichtung, die zwei oder mehr elektrisch in Reihe geschaltete Speichereinheiten aufweist, und einer Symmetriereinrichtung, die die Speichereinheiten im Rahmen eines jeweiligen Symmetriervorgangs in einem vorgegebenen Maße entladen kann, falls der Messwert der an ihnen anliegenden elektrischen Spannung eine vorgegebene Spannungsschwelle überschreitet, weist eine Beobachtungseinrichtung auf, die die Symmetriervorgänge über einen Beobachtungszeitraum beobachtet und ein Warnsignal erzeugt, wenn die beobachteten Symmetriervorgänge die Speichereinheiten über ein vorgegebenes Maß hinaus ungleichmäßig betreffen wobei die Beobachtungseinrichtung das Warnsignal erzeugt, wenn am Ende des Beobachtungszeitraums für eine oder mehrere Speichereinheiten keine Symmetriervorgänge beobachtet worden sind.

Einer Weiterbildung der erfindungsgemäßen Anordnung zufolge sind die Speichereinheiten oder ist zumindest eine der Speichereinheiten durch eine einzige Batteriezelle gebildet.

Einer alternativen weiteren Weiterbildung der erfindungsgemäßen Anordnung zufolge weisen die Speichereinheiten oder weist zumindest eine der Speichereinheiten zwei oder mehr Batteriezellen, insbesondere eine Reihen- und/oder Parallelschaltung an Batteriezellen, auf.

Das erfindungsgemäße Verfahren sowie die erfindungsgemäße Anordnung können besonders vorteilhaft in einem Fahrzeug, insbesondere einem Schienenfahrzeug, eingesetzt werden, sofern ein solches mit einer oder mehreren so genannten Traktionsbatterien für die Speisung eines elektrischen Antriebs des Fahrzeugs ausgestattet sind.

Die Erfindung wird nachfolgend anhand von Ausführungsbeispielen näher erläutert. Dabei zeigen beispielhaft

Figur 1     ein Ausführungsbeispiel für eine erfindungsgemäße Anordnung,

Figur 2     anhand eines schematischen Flussdiagramms ein Ausführungsbeispiel für ein erfindungsgemäßes Verfahren zum Betreiben der Anordnung gemäß Figur 1 und

Figur 3     anhand eines schematischen Flussdiagramms ein weiteres Ausführungsbeispiel für ein erfindungsgemäßes Verfahren zum Betreiben der Anordnung gemäß Figur 1.

In den Figuren werden für identische oder vergleichbare Komponenten stets dieselben Bezugszeichen verwendet.

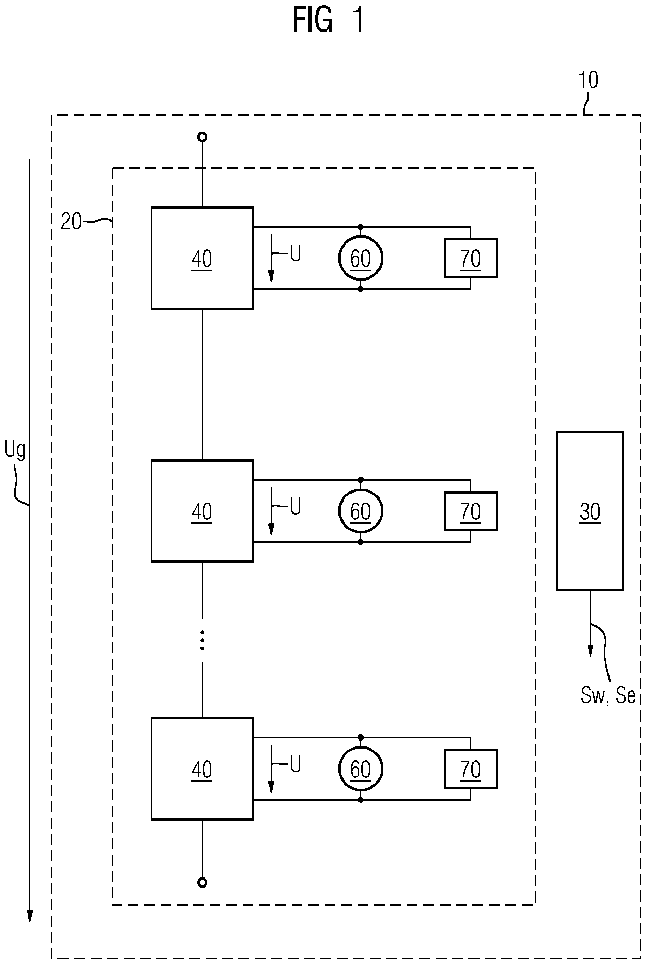

Die Figur 1 zeigt ein Ausführungsbeispiel für eine Anordnung 10, die eine elektrische Speichereinrichtung 20 und eine der Speichereinrichtung 20 zugeordnete Beobachtungseinrichtung 30 umfasst. Die elektrische Speichereinrichtung 20 weist eine Anzahl N an Speichereinheiten 40 auf, von denen in der Figur 1 beispielhaft nur drei dargestellt sind.

Die elektrische Spannung U der Speichereinheiten 40 wird individuell überwacht, hierzu ist, wie in Figur 1 gezeigt, jeder der Speichereinheiten 40 jeweils eine Spannungsmesseinrichtung 60 individuell zugeordnet.

Den Speichereinheiten 40 ist bei dem Ausführungsbeispiel gemäß Figur 1 außerdem jeweils eine Entladeeinrichtung 70 zugeordnet, die ihre Speichereinheit 40 entladen kann, sei es durch Umwandlung gespeicherter elektrischer Energie in Wärme mittels eines elektrischen Widerstands oder durch Umladen gespeicherter Energie in andere Speicher, beispielsweise in eine oder mehrere der anderen Speichereinheiten 40 der Speichereinrichtung 20. Die für ein solches Umladen nötige Verschaltung oder die für einen Energieverbrauch nötigen Widerstände sind aus Gründen der Übersicht in der Figur 1 nicht näher dargestellt.

Die Funktion der Entladeeinrichtungen 70 besteht darin, ihre zugeordneten Speichereinheiten 40 im Rahmen von Entladevorgängen jeweils in einem vorgegebenen Maße zu entladen, falls der durch die Spannungsmesseinrichtung 60 erfasste Messwert der an ihnen anliegenden elektrischen Spannung U eine vorgegebene Spannungsschwelle überschreitet. Durch das Entladen werden die Spannungsverhältnisse innerhalb der Speichereinrichtung 20 bzw. die Spannungsverhältnisse zwischen den Speichereinheiten 40 untereinander angeglichen bzw. symmetriert, weshalb die Entladevorgänge auch als Symmetriervorgänge bezeichnet werden können.

Die Symmetriervorgänge können von den Speichereinheiten 40 jeweils autark mittels einer aus Gründen der Übersicht nicht dargestellten eigenen Symmetriereinheit oder alternativ durch eine zentrale Symmetriereinrichtung der Speichereinrichtung 20 ausgelöst bzw. durchgeführt werden.

Die Beobachtungseinrichtung 30 beobachtet die Symmetriervorgänge und kann ein Warnsignal Sw erzeugen, wenn die beobachteten Symmetriervorgänge die Speichereinheiten 40 über ein vorgegebenes Maß hinaus ungleichmäßig betreffen. Dies soll nachfolgend anhand von Ausführungsbeispielen näher erläutert werden.

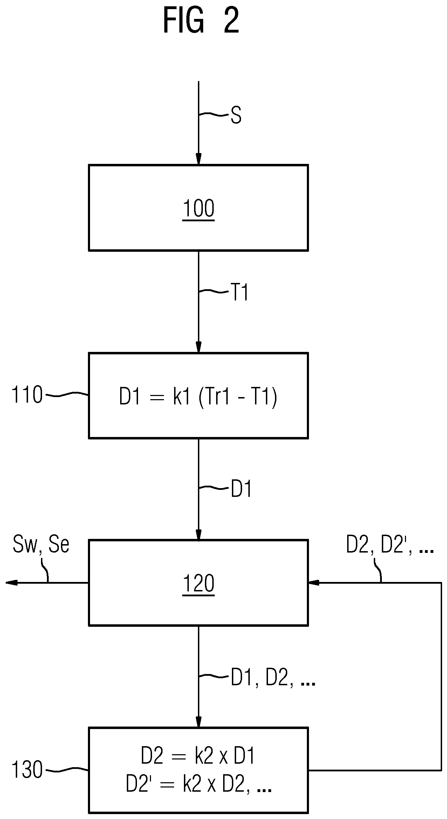

Die Figur 2 zeigt anhand eines schematischen Flussdiagramms ein erstes Ausführungsbeispiel für ein Verfahren zum Beobachten der Symmetriervorgänge in den einzelnen Speichereinheiten 40 der Speichereinrichtung 20 gemäß Figur 1.

Die Beobachtung wird aktiviert bzw. initialisiert, sobald ein externes Startsignal S eingeht. In dem Startschritt 100 wird eine erste Zeitpunktangabe T1 erzeugt, die den Beginn des Beobachtungszeitraumes definiert, sobald der erste Symmetriervorgang an einer beliebigen Speichereinheit 40 ausgelöst bzw. gemeldet wird.

Anschließend werden weitere Symmetriervorgänge in den Speichereinheiten 40 in einem Beobachtungsschritt 110 erfasst. Wird festgestellt, dass für eine vorgegebene Anzahl oder einen vorgegebenen Anteil an Speichereinheiten 40 jeweils ein Symmetriervorgang beobachtet worden ist, so wird erstmals - zu einem Zeitpunkt, der nachfolgend erster Referenzzeitpunkt Tr1 genannt wird - die Dauer D1 des Beobachtungszeitraums festgelegt und somit das Ende des laufenden Beobachtungszeitraumes geplant.

Nachfolgend wird beispielhaft davon ausgegangen, dass die Speichereinrichtung 20 N = 100 Speichereinheiten 40 umfasst und der vorgegebene Anteil an Speichereinheiten 95 % beträgt, also der erste Referenzzeitpunkt Tr1 erreicht wird, wenn 95 Speichereinheiten 40 jeweils zumindest einmal symmetriert worden sind.

Das Ende des Beobachtungszeitraums wird erstmals vorzugsweise in Abhängigkeit sowohl von dem ersten Referenzzeitpunkt Tr1 als auch in Abhängigkeit von der Zeitspanne zwischen dem Beobachtungsbeginn T1 und dem ersten Referenzzeitpunkt Tr1 festgelegt, beispielsweise gemäß:

$$D1 \;=\; k1 \;\cdot\; (Tr1 \;-\; T1)$$

wobei D1 die Gesamtdauer des erstmals festgelegten Beobachtungszeitraums beispielsweise in Stunden beschreibt und k1 (k1 > 1) einen Faktor bezeichnet. D1 beschreibt dabei nicht nur die Gesamtdauer des erstmals festgelegten Beobachtungszeitraums, sondern legt dadurch selbstverständlich mittelbar auch die noch verbleibende Restdauer der Beobachtung ab dem ersten Referenzzeitpunkt Tr1 und damit das Ende des Beobachtungszeitraums fest.

Anschließend werden weitere Symmetriervorgänge, sofern sie auftreten, in einem weiteren Beobachtungsschritt 120 erfasst.

Wird in dem weiteren Beobachtungsschritt 120 festgestellt, dass vor Ende des aktuell festgesetzten Beobachtungszeitraums - dies ist bei der erstmaligen Ausführung des Beobachtungsschritts 120 der erstmals festgelegte Beobachtungszeitraum und bei nachfolgenden Beobachtungsschritten der jeweils im vorherigen Neufestsetzschritt (siehe unten) neu festgesetzte Beobachtungszeitraum - keine Speichereinheit 40 erstmals symmetriert worden ist, also von denjenigen Speichereinheiten 40, die seit der Zeitpunktangabe T1 noch nicht symmetriert worden sind, so erzeugt die Beobachtungseinrichtung 30 das Warnsignal Sw.

Wird in dem weiteren Beobachtungsschritt 120 festgestellt, dass vor Ende des aktuell festgesetzten Beobachtungszeitraums zumindest eine der Speichereinheiten 40, die seit der Zeitpunktangabe T1 noch nicht symmetriert worden sind, zwischenzeitlich symmetriert wurde, und dies nicht die letzte unsymmetrierte Speichereinheit war, so wird in einem nachfolgenden Neufestsetzschritt 130 das Ende des Beobachtungszeitraums nochmals neu festgelegt. Handelte es sich hingegen um die bis dato letzte unsymmetrierte Speichereinheit und sind somit alle Speichereinheiten "rechtzeitig" zumindest einmal symmetriert worden, so wird ein Entwarnsignal Se erzeugt.

In dem Neufestsetzschritt 130 wird das jeweils neue aktuelle Ende des Beobachtungszeitraums bzw. die entsprechende noch zusätzliche Beobachtungsdauer beispielsweise in Abhängigkeit von der Länge des zuletzt festgesetzten Beobachtungszeitraums neu festgelegt, beispielsweise gemäß:

$$D2 = k2 \cdot D1$$

wobei D2 die neue Länge des bereits laufenden Beobachtungszeitraums bezeichnet und damit mittelbar auch die zusätzliche weitere Beobachtungsdauer bzw. das neue, nach hinten verschobene Ende des Beobachtungszeitraums festlegt. D1 bezeichnet hier die Gesamtdauer des erstmalig festgelegten Beobachtungszeitraums und k2 einen Faktor (k2 > 1).

Anschließend wird in den Beobachtungsschritt 120 zurückgesprungen und es werden die weiteren Symmetriervorgänge in den Speichereinheiten 40 erfasst, wie dies oben bereits beschrieben wurde.

Wird im Beobachtungsschritt 120 während des laufenden Beobachtungszeitraums wieder festgestellt, dass eine Neufestsetzung des Beobachtungszeitraums erfolgen muss bzw. soll, so wird wieder der Neufestsetzschritt 130 durchgeführt, mit der Maßgabe, dass der zuletzt festgesetzte Beobachtungszeitraum D2 für die Bestimmung des jeweils neuen Beobachtungszeitraums D2' herangezogen wird, gemäß

$$D2' = k2 \cdot D2$$

Der Faktor k2 kann für alle Schleifendurchläufe des Beobachtungsschritts 120 und des Neufestsetzschritts 130 identisch sein. Alternativ kann k2 abhängig sein von der Anzahl i der bereits zuvor durchlaufenen Schleifendurchläufe, es kann also gelten:

$$k2 = f(i)$$

wobei f eine von der Anzahl i abhängige mathematische Funktion ist.

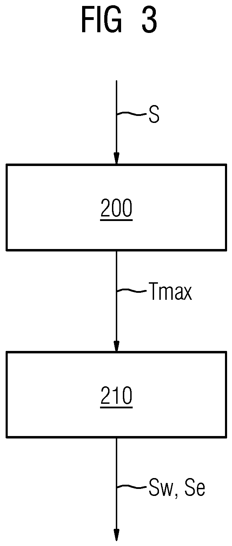

Die Figur 3 zeigt anhand eines schematischen Flussdiagramms ein zweites Ausführungsbeispiel für ein Verfahren zum Beobachten der Symmetriervorgänge in den einzelnen Speichereinheiten 40 der Speichereinrichtung 20 gemäß Figur 1.

Die Beobachtung wird in einem Startschritt 200 begonnen, sobald ein externes Startsignal S eingeht. In dem Startschritt 200 wird bei Eingang des Startsignals S die maximale Beobachtungsdauer Tmax der Beobachtung festgelegt.

Anschließend werden Symmetriervorgänge in den Speichereinheiten 40 in einem Beobachtungsschritt 210 erfasst. Wird bis zum Ende der zuvor festgelegten maximalen Beobachtungsdauer Tmax festgestellt, dass nicht alle der N = 100 Speichereinheiten 40 zumindest jeweils ein einziges Mal symmetriert worden sind, so wird ein Warnsignal Sw erzeugt, andernfalls ein Entwarnsignal Se.

Die Beobachtung, wie sie beispielhaft im Zusammenhang mit den Figuren 2 und 3 erläutert wurden, kann in Beobachtungszeiträumen durchgeführt werden, die nur Zeitphasen berücksichtigen, in denen die Speichereinrichtung 20 im Normalbetriebsmodus betrieben wird, also die Speichereinheiten 40 geladen und entladen werden, um eine externe Funktion zu erfüllen, beispielsweise einen Betrieb eines Antriebs eines Fahrzeugs, insbesondere eines Schienenfahrzeugs, zu ermöglichen oder zu unterstützen.

Alternativ kann die Beobachtung, wie sie beispielhaft im Zusammenhang mit den Figuren 2 und 3 erläutert wurden, in Beobachtungszeiträumen durchgeführt werden, die nur Zeitphasen berücksichtigen, in denen die Speichereinrichtung 20 in einem Prüfbetriebsmodus betrieben wird, bei dem die Funktionsweise der Speichereinrichtung 20 insbesondere der Spannungsmesseinrichtungen 60, überprüft wird. Vorteilhaft ist es, wenn im Rahmen des Prüfbetriebsmodus die Spannung an der elektrischen Speichereinrichtung 20 auf einem Spannungsniveau gehalten wird, das der maximal erlaubten Gesamtspannung Ug an der elektrischen Speichereinrichtung 20 entspricht und durch stetes Nachladen während des Prüfbetriebsmodus aufrechterhalten wird.

Bezugszeichenliste

| | |
|---|---|
| 10 | Anordnung |
| 20 | Speichereinrichtung |
| 30 | Beobachtungseinrichtung |
| 40 | Speichereinheit |
| 60 | Spannungsmesseinrichtung |
| 70 | Entladeeinrichtung |
| 100 | Startschritt |
| 110 | Beobachtungsschritt |
| 120 | Beobachtungsschritt |
| 130 | Neufestsetzschritt |
| 200 | Startschritt |
| 210 | Beobachtungsschritt |
| | |
| D1 | Gesamtdauer des erstmals festgelegten Beobachtungszeitraums |
| D2 | neue aktuelle Länge des Beobachtungszeitraums |
| D2' | neuer Beobachtungszeitraum |
| k1 | Faktor |
| k2 | Faktor |
| S | Startsignal |
| Se | Entwarnsignal |
| Sw | Warnsignal |
| T1 | Zeitpunktangabe |
| Tmax | maximale Beobachtungsdauer |
| Tr1 | Referenzzeitpunkt |
| U | Spannung |
| Ug | Gesamtspannung |

**Patentansprüche**

1. Verfahren zum Überwachen einer elektrischen Speichereinrichtung (20), die zwei oder mehr elektrisch in Reihe geschaltete Speichereinheiten (40) aufweist, wobei die Speichereinheiten (40) im Rahmen eines jeweiligen Symmetriervorgangs in einem vorgegebenen Maße entladen werden, falls ein die an ihnen jeweils anliegende elektrische Spannung (U) angebender Spannungswert eine vorgegebene Spannungsschwelle überschreitet, wobei die Symmetriervorgänge über einen Beobachtungszeitraum beobachtet werden und ein Warnsignal (Sw) erzeugt wird, wenn die beobachteten Symmetriervorgänge die Speichereinheiten (40) über ein vorgegebenes Maß hinaus ungleichmäßig betreffen, **dadurch gekennzeichnet, dass** das Warnsignal (Sw) erzeugt wird, wenn am Ende des Beobachtungszeitraums für eine oder mehrere Speichereinheiten (40) keine Symmetriervorgänge beobachtet worden sind.

2. Verfahren nach Anspruch 1, **dadurch gekennzeichnet, dass** der Beobachtungszeitraum mit der Erstinbetriebnahme oder Wiederinbetriebnahme der Speichereinrichtung (20) gestartet wird und ausschließlich zeitliche Phasen einschließt, in denen die Speichereinrichtung (20) bestimmungsgemäß genutzt und in keinem Prüfbetriebsmodus betrieben wird, wobei in dem Prüfbetriebsmodus eine Funktionsweise der Speichereinrichtung (20) überprüft wird.

3. Verfahren nach Anspruch 1, **dadurch gekennzeichnet, dass**

   - die Beobachtung im Rahmen eines Prüfbetriebsmodus, der sich von einem Normalbetriebsmodus der Speichereinrichtung (10) unterscheidet, erfolgt, wobei im Normalbetriebsmodus die Speichereinheiten (40) geladen und entladen werden zur Erfüllung einer externen Funktion, und
   - der Beobachtungszeitraum mit dem Umschalten von dem Normalbetriebsmodus in den Prüfbetriebsmodus begonnen wird.

4. Verfahren nach Anspruch 3, **dadurch gekennzeichnet, dass** im Rahmen des Prüfbetriebsmodus die Spannung an der elektrischen Speichereinrichtung (20) auf einem Spannungsniveau gehalten wird, das der maximal erlaubten Gesamtspannung (Ug) an der elektrischen Speichereinrichtung (20) entspricht und welches durch stetes Nachladen während des Prüfbetriebsmodus gehalten wird.

5. Verfahren nach einem der vorstehenden Ansprüche, **dadurch gekennzeichnet, dass**

   - die Dauer des Beobachtungszeitraums fest vorgegeben ist, und
   - das Ende des Beobachtungszeitraums abhängig von dem Beginn der Beobachtung festgelegt wird.

6. Verfahren nach einem der vorstehenden Ansprüche 1 bis 4, **dadurch gekennzeichnet, dass**

   - die Dauer des Beobachtungszeitraums variabel ist, und
   - das Ende des Beobachtungszeitraums abhängig von beobachteten Symmetriervorgängen festgelegt wird.

7. Verfahren nach einem der vorstehenden Ansprüche, **dadurch gekennzeichnet, dass** das Ende des Beobachtungszeitraums erstmals festgelegt wird, wenn zu einem ersten Referenzzeitpunkt (Tr1) für eine vorgegebene Anzahl oder einen vorgegebenen Anteil an Speichereinheiten (40) jeweils ein Symmetriervorgang beobachtet worden ist.

8. Verfahren nach Anspruch 7, **dadurch gekennzeichnet, dass** das Ende des Beobachtungszeitraums in Abhängigkeit sowohl von dem ersten Referenzzeitpunkt (Tr1) als auch von einer Zeitspanne (Tr1-T1) zwischen einem Zeitpunkt (T1) des Beginns der Beobachtung und dem ersten Referenzzeitpunkt (Tr1) festgelegt wird.

9. Verfahren nach Anspruch 7 oder 8, **dadurch gekennzeichnet, dass** ein neues Ende des Beobachtungszeitraums festgelegt wird, wenn nach Beginn und vor Ablauf des aktuellen Beobachtungszeitraums (D1, D2, D2') bei zumindest einer Speichereinheit (40) erstmalig ein Symmetriervorgang beobachtet wird, wobei der Zeitpunkt dieser Beobachtung einen weiteren Referenzzeitpunkt bildet.

10. Verfahren nach Anspruch 9, **dadurch gekennzeichnet, dass** das neue Ende des Beobachtungszeitraums in Abhängigkeit von dem weiteren Referenzzeitpunkt und einer Zeitspanne zwischen dem Zeitpunkt (T1) des Beginns der Beobachtung und dem weiteren Referenzzeitpunkt festgelegt wird.

11. Verfahren nach einem der vorstehenden Ansprüche, **dadurch gekennzeichnet, dass** die Beobachtung zumindest zwei Beobachtungzeiträume umfasst, mit

- einem Beobachtungszeitraum, der ausschließlich Zeiten berücksichtigt, in denen die Speichereinrichtung (10) im Normalbetriebsmodus betrieben wird, und
- einem oder mehreren Beobachtungszeiträumen, die ausschließlich Zeiten berücksichtigen, in denen die Speichereinrichtung (10) im Prüfbetriebsmodus betrieben wird.

12. Anordnung mit einer elektrischen Speichereinrichtung (20), die zwei oder mehr elektrisch in Reihe geschaltete Speichereinheiten (40) aufweist, und einer Symmetriereinrichtung, die die Speichereinheiten (40) im Rahmen eines jeweiligen Symmetriervorgangs in einem vorgegebenen Maße entladen kann, falls ein die an ihnen jeweils anliegende elektrische Spannung (U) angebender Spannungswert eine vorgegebene Spannungsschwelle überschreitet, wobei

    die Anordnung eine Beobachtungseinrichtung (30) aufweist, die die Symmetriervorgänge über einen Beobachtungszeitraum beobachtet und ein Warnsignal (Sw) erzeugt, wenn die beobachteten Symmetriervorgänge die Speichereinheiten (40) über ein vorgegebenes Maß hinaus ungleichmäßig betreffen,
    **dadurch gekennzeichnet, dass**
    die Beobachtungseinrichtung (30) das Warnsignal (Sw) erzeugt, wenn am Ende des Beobachtungszeitraums für eine oder mehrere Speichereinheiten (40) keine Symmetriervorgänge beobachtet worden sind.

13. Anordnung nach Anspruch 12,
    **dadurch gekennzeichnet, dass**
    die Speichereinheiten (40) oder zumindest eine der Speichereinheiten (40) durch eine einzige Batteriezelle gebildet sind.

14. Anordnung nach Anspruch 12,
    **dadurch gekennzeichnet, dass**
    die Speichereinheiten (40) oder zumindest eine der Speichereinheiten (40) zwei oder mehr Batteriezellen, insbesondere eine Reihen- und/oder Parallelschaltung an Batteriezellen, aufweisen.

**Claims**

1. Method for monitoring an electrical storage facility (20), which has two or more storage units (40) electrically connected in series, wherein the storage units (40) are discharged by a predefined amount as part of a respective balancing procedure, if a voltage value indicating the electrical voltage (U) applied thereto in each case exceeds a predefined voltage threshold,

wherein
the balancing procedures are observed over an observation time period and a warning signal (Sw) is generated if the observed balancing procedures affect the storage units (40) unevenly beyond a predefined amount, **characterised in that** the warning signal (Sw) is generated if no balancing procedures have been observed for one or more storage units (40) at the end of the observation time period.

2. Method according to claim 1,
**characterised in that**
the observation time period is started on the first commissioning or recommissioning of the storage facility (20), and exclusively includes temporal phases in which the storage facility (20) is used as intended and is not operated in a test operating mode, wherein in the test operating mode a functionality of the storage facility (20) is checked.

3. Method according to claim 1,
**characterised in that**

    - the observation takes place as part of a test operating mode, which differs from a normal operating mode of the storage facility (10), wherein in the normal operating mode the storage units (40) are charged and discharged to fulfil an external function, and
    - the observation time period is begun on switchover from the normal operating mode to the test operating mode.

4. Method according to claim 3,
**characterised in that**,
as part of the test operating mode, the voltage at the electrical storage facility (20) is kept at a voltage level which corresponds to the maximum permitted total voltage (Ug) at the electrical storage facility (20) and which is maintained by constant recharging during the test operating mode.

5. Method according to one of the preceding claims,
**characterised in that**

    - the duration of the observation time period is predefined on a permanent basis, and
    - the end of the observation time period is specified as a function of the beginning of the observation.

6. Method according to one of the preceding claims 1 to 4,
**characterised in that**

    - the duration of the observation time period is variable, and
    - the end of the observation time period is specified as a function of observed balancing procedures.

7. Method according to one of the preceding claims, **characterised in that** the end of the observation time period is specified for the first time, when a balancing procedure has been observed at a first reference time point (Tr1) for a predefined number or a predefined proportion of storage units (40) in each case.

8. Method according to claim 7, **characterised in that** the end of the observation time period is specified as a function of both the first reference time point (Tr1) and a time span (Tr1-T1) between a time point (T1) of the beginning of the observation and the first reference time point (Tr1).

9. Method according to claim 7 or 8, **characterised in that** a new end of the observation time period is specified when, after the current observation time period (D1, D2, D2') begins and before it expires, a balancing procedure is observed for at least one storage unit (40) for the first time, wherein the time point of this observation forms a further reference time point.

10. Method according to claim 9, **characterised in that** the new end of the observation time period is specified as a function of the further reference time point and a time span between the time point (T1) of the beginning of the observation and the further reference time point.

11. Method according to one of the preceding claims, **characterised in that** the observation comprises at least two observation time periods, with

　　- an observation time period that exclusively takes into consideration times in which the storage facility (10) is operated in the normal operating mode, and
　　- one or more observation time periods that exclusively take into consideration times in which the storage facility (10) is operated in the test operating mode.

12. Arrangement with an electrical storage facility (20), which has two or more storage units (40) electrically connected in series, and a balancing facility, which can discharge the storage units (40) by a predefined amount as part of a respective balancing procedure, if a voltage value indicating the electrical voltage (U) applied thereto in each case exceeds a predefined voltage threshold,

wherein

　　the arrangement has an observation facility (30), which observes the balancing procedures over an observation time period and generates a warning signal (Sw) if the observed balancing procedures affect the storage units (40) unevenly beyond a predefined amount, **characterised in that** the warning signal (Sw) is generated if no balancing procedures have been observed for one or more storage units (40) at the end of the observation time period.

13. Arrangement according to claim 12, **characterised in that** the storage units (40) or at least one of the storage units (40) are formed by a single battery cell.

14. Arrangement according to claim 12, **characterised in that** the storage units (40) or at least one of the storage units (40) have two or more battery cells, in particular a series and/or parallel circuit of battery cells.

**Revendications**

1. Procédé de contrôle d'un dispositif (20) accumulateur électrique, qui a deux ou plusieurs unités (40) accumulatrices montées électriquement en série, dans lequel on décharge dans une mesure donnée à l'avance les unités (40) accumulatrices dans le cadre d'un processus de symétrie respectif, si une valeur de tension indiquant une tension (U) électrique s'y appliquant respectivement dépasse un seuil de tension donné à l'avance, dans lequel

　　on observe les processus de symétrie sur un laps de temps d'observation et on produit un signal (Sw) d'alerte, si les processus de symétrie observés concernent, d'une manière inégale au-delà d'une mesure donnée à l'avance, les unités (40) accumulatrices, **caractérisé en ce que** l'on produit le signal (Sw) d'alerte, si à la fin du laps de temps d'observation il n'a pas été observé de processus de symétrie pour une ou pour plusieurs unités (40) accumulatrices.

2. Procédé suivant la revendication 1, **caractérisé en ce que** l'on fait commencer le laps de temps d'observation avec la première mise en fonctionnement ou la remise en fonctionnement du dispositif (20) accumulateur et il inclut exclusivement des phases temporelles, dans lesquelles le dispositif (20) accumulateur est utilisé conformément aux prescriptions et ne fonctionne pas dans un mode de fonctionnent de contrôle, dans lequel, dans le mode de fonctionnement de contrôle, on contrôle une façon de fonctionner du dispositif (20) accumulateur.

3. Procédé suivant la revendication 1,
**caractérisé en ce que**

   - l'observation s'effectue dans le cadre d'un mode de fonctionnement de contrôle, qui se distingue d'un mode de fonctionnement normal du dispositif (10) accumulateur, dans lequel, dans le mode de fonctionnement normal, on charge et on décharge les unités (40) accumulatrices pour remplir une fonction extérieure, et
   - on fait commencer le laps de temps d'observation avec le passage du mode de fonctionnement normal au mode de fonctionnement de contrôle.

4. Procédé suivant la revendication 3,
**caractérisé en ce que**,
dans le cadre du mode de fonctionnement de contrôle, on maintient la tension au dispositif (20) accumulateur électrique à un niveau de tension, qui correspond à la tension (Ug) d'ensemble permise au maximum sur le dispositif (20) accumulateur électrique et que l'on maintient par une recharge constante pendant le mode de fonctionnement de contrôle.

5. Procédé suivant l'une des revendications précédentes,
**caractérisé en ce que**

   - la durée du laps de temps d'observation est prescrite de manière fixe, et
   - on fixe la fin du laps de temps d'observation en fonction du début de l'observation.

6. Procédé suivant l'une des revendications 1 à 4 précédentes,
**caractérisé en ce que**

   - la durée du laps de temps d'observation est variable, et
   - on fixe la fin du laps de temps d'observation en fonction des processus de symétrie observés.

7. Procédé suivant l'une des revendications précédentes,
**caractérisé en ce que**
l'on fixe la fin du laps de temps d'observation pour la première fois, lorsqu'à un premier instant (Tr1) de référence, il a été observé, pour un nombre donné à l'avance ou une proportion donnée à l'avance d'unités (40) accumulatrices respectivement un processus de symétrie.

8. Procédé suivant la revendication 7,
**caractérisé en ce que**
l'on fixe la fin du laps de temps d'observation en fonction à la fois du premier instant (Tr1) de référence et également d'un laps de temps (Tr1-T1) entre un instant (T1) du début de l'observation et le premier instant (Tr1) de référence.

9. Procédé suivant la revendication 7 ou 8,
**caractérisé en ce que**
l'on fixe une nouvelle fin du laps de temps d'observation, lorsque, après le début et avant l'expiration du laps de temps (D1, D2, D2') d'observation en cours pour au moins une unité (40) accumulatrice, on observe pour la première fois un processus de symétrie, dans lequel l'instant de cette observation forme un autre instant de référence.

10. Procédé suivant la revendication 9,
**caractérisé en ce que**
l'on fixe la nouvelle fin du laps de temps d'observation en fonction de l'autre instant de référence et d'un laps de temps entre l'instant (T1) du début de l'observation et l'autre instant de référence.

11. Procédé suivant l'une des revendications précédentes,
**caractérisé en ce que**
l'observation comprend au moins deux laps de temps d'observation, comprenant

   - un laps de temps d'observation, qui prend en compte exclusivement des temps, dans lesquels on fait fonctionner le dispositif (10) accumulateur dans le mode de fonctionnement normal, et
   - un ou plusieurs laps de temps d'observation, qui prennent en compte exclusivement des temps, dans lesquels on fait fonctionner le dispositif (10) accumulateur dans le mode de fonctionnement de contrôle.

12. Agencement comprenant un dispositif (20) accumulateur électrique, qui a deux ou plusieurs unités (40) accumulatrices montées en série électriquement et un dispositif de symétrie, qui peut décharger les unités (40) accumulatrices dans une mesure donnée à l'avance, dans le cadre d'un processus de symétrie respectif, si une valeur de tension indiquant la tension (U) électrique s'y appliquant respectivement dépasse une valeur de seuil donnée à l'avance,
dans lequel

   l'agencement a un dispositif (30) d'observation, qui observe les processus de symétrie sur un laps de temps d'observation et produit un signal (Sw) d'alerte, si les processus de symétrie observés concernent, d'une manière inégale au-delà d'une mesure donnée à l'avance, les unités (40) accumulatrices,
**caractérisé en ce que**
le dispositif (30) d'observation produit le signal (Sw) d'alerte, si, à la fin du laps de temps d'observation, il n'a pas été observé de processus de symétrie pour une ou pour plusieurs unités (40) accumulatrices.

13. Agencement suivant la revendication 12,
    **caractérisé en ce que**
    les unités (40) accumulatrices ou du moins l'une des unités (40) accumulatrices sont formées par une cellule de batterie unique.

14. Agencement suivant la revendication 12,
    **caractérisé en ce que** les unités (40) accumulatrices ou du moins l'une des unités (40) accumulatrices ont deux ou plusieurs cellules de batterie, en particulier un circuit série et/ou parallèle de cellules de batterie.

# FIG 1

# FIG 2

$$D1 = k1 (Tr1 - T1)$$

110

$$D2 = k2 \times D1$$
$$D2' = k2 \times D2, ...$$

130

Sw, Se

D2, D2', ...

D1, D2, ...

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013065093 A1
- US 2014152258 A1
- US 2014227571 A1
- DE 102018201031 A1